# EUROPÄISCHE PATENTANMELDUNG

(11) **EP 3 809 723 A1**
(43) Veröffentlichungstag der Anmeldung: **21.04.2021**
(21) Anmeldenummer: 20200360.4
(22) Anmeldetag: 06.10.2020
(51) Int. Cl.: H04R 25/00, H04R 1/10, H01Q 7/06, H01Q 1/27, H02J 7/00, H01Q 1/52

(54) **HÖRINSTRUMENT**

(30) Priorität: 15.10.2019 DE 102019215843
(71) Anmelder: Sivantos Pte. Ltd., Singapore 539775 (SG)
(72) Erfinder: SCHMIDT, Martin, 91058 Erlangen (DE); NIKLES, Peter, 91054 Erlangen (DE)
(74) Vertreter: FDST Patentanwälte

(57) **Zusammenfassung**

Es wird ein Hörinstrument (2) mit einer wiederaufladbaren Batterie (12), mit einer Ladespule (16) zum induktiven Empfangen von Energie zum Aufladen der Batterie (12), mit einer von der Ladespule (16) elektrisch getrennten Sende- und/oder Empfangsspule (14) zum induktiven Senden und/oder Empfangen von Daten, und mit einem Magnetkern (18) angegeben. Sowohl die Ladespule (16) als auch die Sende- und/oder Empfangsspule (14) sind dabei auf dem Magnetkern (18) aufgewickelt.

## Beschreibung

Die Erfindung betrifft ein Hörinstrument mit einer aufladbaren Batterie, einer Ladespule und einer Sende- und/oder Empfangsspule.

Als "Hörinstrument" werden nachfolgend allgemein Geräte bezeichnet, die an oder in dem Ohr eines Nutzers (Trägers) getragen werden und ein akustisches Signal an das Gehör des Trägers abgeben. Zu den Hörinstrumenten gehören insbesondere Geräte, die einen Umgebungsschall aufnehmen, signaltechnisch modifizieren und ein modifiziertes Schallsignal an das Gehör des Trägers abgeben. Eine klassischerweise als "Hörgeräte" bezeichnete Unterklasse solcher Hörinstrumente ist zur Versorgung von Minderhörenden eingerichtet, die im medizinischen Sinne an einem Hörverlust leiden. Ein Hörgerät umfasst hierzu üblicherweise einen Eingangswandler, beispielsweise in Form eines Mikrofons, eine Signalverarbeitungseinheit mit einem Verstärker, sowie einen Ausgangswandler. Der Ausgangswandler ist in der Regel als elektroakustischer Wandler, insbesondere als Miniaturlautsprecher realisiert und wird in diesem Fall auch als "Hörer" (Receiver) bezeichnet. Darüber hinaus stehen auf dem Markt auch Knochenleitungshörhilfen, implantierbare oder vibrotaktile Hörhilfen zur Verfügung. Bei diesen erfolgt die Stimulation des geschädigten Gehörs entweder mechanisch oder elektrisch.

Zusätzlich zu den vorbeschriebenen klassischen Hörgeräten werden Hörinstrumente zur Unterstützung des Hörvermögens von normalhörenden Nutzern angeboten. Solche auch als "Personal Sound Amplification Products" oder "Personal Sound Amplification Devices" (kurz: "PSAD") bezeichnete Hörinstrumente sind von der Struktur her ähnlich aufgebaut wie klassische Hörgeräte und weisen ebenfalls die oben beschriebenen Komponenten, also einem Eingangswandler, eine Signalverarbeitungseinheit sowie einen Ausgangswandler auf.

Ferner bezieht sich die Erfindung auch auf Hörinstrumente, die das akustische Signal drahtgebunden oder drahtlos von einem Peripheriegerät empfangen, z.B. auf Kopfhörer und Headsets.

Um den zahlreichen individuellen Bedürfnissen verschiedener Träger entgegenzukommen, haben sich unterschiedliche Bauformen von Hörinstrumenten etabliert. Bei sogenannten BTE-Hörinstrumenten (Behind-The-Ear, auch Hinter-dem-Ohr, kurz HdO) wird ein Gehäuse, das die Batterie sowie ggf. weitere Komponenten wie Eingangswandler, Signalverarbeitung, etc. enthält, hinter dem Ohr getragen. Der Ausgangswandler kann dabei (bei sogenannten Ex-Hörer- oder Receiver-in-the-Canal-(kurz RIC) Hörinstrumenten direkt im Gehörgang des Trägers angeordnet sein. Alternativ ist der Ausgangswandler innerhalb des hinter dem Ohr getragenen Gehäuses angeordnet. In diesem Fall leitet ein flexibler, auch als "Tube" bezeichneter Schallschlauch das Schallsignal des Ausgangswandlers von dem Gehäuse zum Gehörgang. Bei sogenannten ITE-Hörinstrumenten ("In-the-Ear", auch "In-dem-Ohr", kurz IdO) wird ein Gehäuse, welches sämtliche funktionale Komponenten des Hörinstruments enthält, zumindest teilweise im Gehörgang getragen. Sogenannte CIC-Hörinstrumente (Completely-in-Canal) sind den ITE-Hörinstrumenten ähnlich, werden jedoch vollständig im Gehörgang getragen.

Moderne Hörinstrumente zeichnen sich durch eine zunehmende Anzahl von integrierten Funktionen wie z.B. aktive Geräuschunterdrückung, Stimm- oder Spracherkennung, etc. aus. Hörinstrumente haben daher einen steigenden Energiebedarf, der mit den heute üblichen Einwegbatterien oft nicht in zufriedenstellender Weise gedeckt werden kann. Aufgrund des steigenden Energiebedarfs, aber auch im Sinne einer einfachen und ressourcenschonenden Handhabung, werden daher anstelle von Einweg-Batterien zunehmend leistungsstarke aufladbare Batterien, insbesondere Lithium-Ionen-Batterien (kurz: Li-Ionen-Batterien), als Leistungsquelle für Hörinstrumente eingesetzt. Zum Aufladen solcher Batterien werden bevorzugt drahtlose Ladetechnologien eingesetzt. Hierzu wird in dem Hörinstrument üblicherweise eine Ladespule integriert, die die zum Aufladen der Batterie benötigte Energie über eine induktive Kopplung mit einem Ladegerät empfängt.

Andererseits ist in einem modernen Hörinstrument häufig auch eine Sende- und/oder Empfangsspule (MI-Antenne) integriert, mittels der das Hörinstrument über eine magnetisch induktive Kopplung mit einem externen Sender und/oder Empfänger, z.B. in einem zweiten Hörinstrument für das andere Ohr des Trägers, Daten austauschen kann.

Die Integration dieser mehreren Spulen ist schon allein aufgrund des stark begrenzten Bauraums in einem Hörinstrument schwierig. Erschwerend kommt hinzu, dass bei zu enger oder ungünstiger Positionierung der mehreren Spulen in einem Hörinstrument eine magnetische Kopplung zwischen den Spulen auftreten kann, die die Funktion der Spulen mitunter erheblich beeinträchtigt.

Aus EP 2 899 830 B1 und US 2015/ 0214774 A1 ist ein Ladespulenmodul mit einer Ladespule bekannt, die um den Umfang eines hohlen, zylindrischen Magnetkerns gewickelt ist. Im Inneren des Magnetkerns ist eine wiederaufladbare Batterie angeordnet, die mittels der Batterie aufgeladen wird. Die Ladespule kann auch als Antennenspule verwendet werden.

Aus US 10,020,673 B2 ist ein Mobilgerät mit einer wiederaufladbaren Batterie, einer Ladespule und einer NFC(Near Field Communication)-Antenne bekannt. Die Ladespule und die NFC-Antenne sind dabei derart angeordnet, dass ihre Spulenachsen orthogonal aufeinander stehen.

Der Erfindung liegt die Aufgabe zugrunde, eine kompakte und besonders vorteilhafte Anordnung einer Sende- und/oder Empfangsspule (MI-Antenne) und einer Ladespule in einem Hörinstrument zu ermöglichen.

Diese Aufgabe wird erfindungsgemäß gelöst durch die Merkmale des Anspruchs 1. Vorteilhafte Ausführungsformen der Erfindung sind in den Unteransprüchen und der nachfolgenden Beschreibung dargelegt.

Die Erfindung geht aus von einem Hörinstrument, das eine wiederaufladbare Batterie, eine Ladespule zum induktiven Empfangen von Energie zum Aufladen der Batterie sowie eine von der Ladespule elektrisch getrennte Sende- und/oder Empfangsspule (MI-Antenne) zum induktiven Senden und/oder Empfangen von Daten aufweist. Erfindungsgemäß weist das Hörinstrument einen Magnetkern, insbesondere aus weichmagnetischem Ferritmaterial, auf. Auf diesem Magnetkern sind erfindungsgemäß sowohl die Ladespule als auch die Sende- und/oder Empfangsspule aufgewickelt.

Durch die Nutzung des gemeinsamen Magnetkerns lassen sich die beiden Spulen besonders platzsparend ausführen.

Vorzugsweise sind die Ladespule und die MI-Antenne derart auf dem Magnetkern aufgewickelt sind, dass ihre Spulenachsen exakt oder näherungsweise orthogonal zueinander ausgerichtet sind. Durch diese Anordnung der beiden Spulen zueinander wird eine gegenseitige magnetische Beeinflussung der beiden Spulen ausgeschlossen oder zumindest weitestgehend reduziert. Erfahrungsgemäß sind kleinere Abweichungen von einer exakt orthogonalen Ausrichtung der Spulenachsen für den beabsichtigten Effekt einer magnetischen Entkopplung der Spulen aber unkritisch. Zudem unterliegt die Bewicklung des Magnetkerns mit den beiden Spulen gewissen Fertigungstoleranzen, insbesondere wenn der Magnetkern keine Quaderform hat. Eine exakte oder näherungsweise orthogonale Ausrichtung der Spulenachsen ist daher insbesondere dann schon gegeben, wenn die Spulenachsen zwischen sich einen Winkel von 90° ± 30°, bevorzugt 90° ± 15° und insbesondere 90° ± 5°, bilden.

In einer besonders vorteilhaften Ausführungsform der Erfindung ist der Magnetkern als (topfartiger, ringförmiger oder z.B. hufeisenförmiger) Hohlkörper ausgebildet, in dem die Batterie aufgenommen ist. Zusätzlich oder alternativ zu der Batterie kann im Rahmen der Erfindung auch eine Elektronikkomponente des Hörinstruments, insbesondere eine Ladeelektronik, in dem hohlen Magnetkern angeordnet sein. Durch die hohle Ausführung des Magnetkerns und die Unterbringung der Batterie bzw. der Elektronikkomponente in dem Magnetkern wird eine besonders kompakte Ausführung des Hörinstruments ermöglicht. Gleichzeitig kann hierdurch der Magnetkern mit einem besonders großen umschlossenen Volumen (insbesondere mit besonders großem Querschnitt) ausgeführt werden, ohne dass er die Anordnung der übrigen Komponenten in dem Gehäuse über Gebühr behindern würde. Das große Volumen des Magnetkerns ermöglicht wiederum eine hohe Effektivität der um den Magnetkern gewickelten MI-Antenne.

In zweckmäßiger Ausführung hat der Magnetkern eine zylindrische Form mit zwei einander entlang einer Achse gegenüberliegenden, parallelen Stirnflächen und einer die Stirnflächen verbindenden Umfangswand. Die Stirnflächen sind dabei vorzugsweise kreisförmig ausgebildet, können grundsätzlich im Rahmen der Erfindung aber auch oval, polygonal oder unregelmäßig geformt sein. In einer vorteilhaften Dimensionierung steht die entlang der Achse gemessene Höhe des Magnetkerns zu der quer zu der Achse gemessenen Breite des Magnetkerns in einem Verhältnis zwischen 1:1 und 1:4 (bei nicht-kreisförmigen Stirnflächen ist die Breite hierbei durch die größte Ausdehnung des Magnetkerns quer zu der Achse gegeben). Insbesondere liegt das Verhältnis der Höhe zu der Breite des Magnetkerns bei etwa 1:2,5. Der Magnetkern hat hierbei also die Form eines flachen Zylinders.

Im Falle eines zylinderförmigen Magnetkerns ist vorzugsweise eine der beiden Spulen, insbesondere die MI-Antenne, um die Umfangswand gewickelt, so dass ihre Spulenachse parallel zu der Achse des Magnetkerns ausgerichtet ist. Die andere Spule, insbesondere also die Ladespule, ist dagegen über die Stirnflächen und Umfangswand des Magnetkerns gewickelt, so dass ihre Spulenachse orthogonal (senkrecht) zu der Achse des Magnetkerns ausgerichtet ist.

Das Hörinstrument kann im Rahmen der Erfindung in jeder der eingangs genannten Ausführungsvarianten ausgeführt sein, insbesondere als (zur Versorgung von minderhörenden Nutzern ausgelegtes) Hörgerät, als Personal Sound Amplification Device, als Kopfhörer oder Headset. Des Weiteren kann das erfindungsgemäße Hörinstrument in beliebiger Bauform, insbesondere einer der eingangs genannten Bauformen (BTE, RIC, ITE, CIC, etc.) realisiert sein.

Nachfolgend wird ein Ausführungsbeispiel der Erfindung anhand einer Zeichnung näher erläutert. Darin zeigen:
- Fig. 1: in schematischer Darstellung ein Hörinstrument mit einem hohlen Magnetkern, in dem eine wiederaufladbaren Batterie und eine Ladeelektronik angeordnet sind, sowie mit zwei voneinander elektrisch getrennten Spulen, nämlich einer Ladespule und einer Sende- und Empfangsspule (MI-Antenne), die beide um den Magnetkern gewickelt sind,
- Fig. 2: in Darstellung gemäß Fig. 1 das dortige Hörinstrument sowie ein externes Ladegerät, das durch induktive Kopplung mit der Ladespule die Batterie des Hörinstruments drahtlos lädt,
- Fig. 3: in Darstellung gemäß Fig. 1 das dortige Hörinstrument sowie ein weiteres Hörinstruments, das durch induktive Kopplung drahtlos Daten an die MI-Antenne sendet und von dieser empfängt, und
- Fig. 4: in einer schematischen perspektivischen Darstellung den mit der Ladespule und der MI-Antenne bewickelten Magnetkern.

Einander entsprechende Teile sind in allen Figuren stets mit gleichen Bezugszeichen versehen.

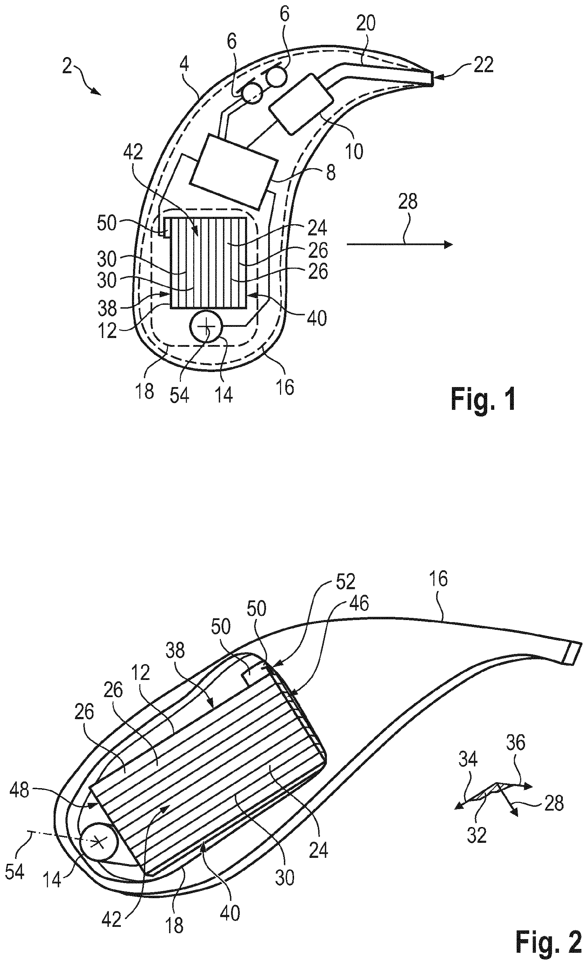

In Fig. 1 ist grob schematisch ein Hörinstrument 2 in Form eines (BTE-)Hörgeräts dargestellt.

Das Hörinstrument 2 umfasst ein hinter dem Ohr eines minderhörenden Trägers zu tragendes Gehäuse 4, in welchem als Hauptkomponenten zwei Eingangswandler 6 in Form von Mikrofonen, eine Signalverarbeitungseinheit 8 mit einem digitalen Signalprozessor (z.B. in Form eines ASIC) und/oder einem Mikrocontroller, ein Ausgangswandler 10 in Form eines Hörers sowie eine aufladbare Batterie 12 angeordnet sind. Bei der Batterie 12 handelt es sich um eine Li-Ionen-Batterie. Das Hörinstrument 2 umfasst weiterhin eine (magnetisch) induktive Spule (nachfolgend MI-Antenne 14) zum Senden und/oder Empfangen von magnetischen Wechselsignalen, eine Ladespule 16, eine Ladeelektronik 17 sowie einen Magnetkern 18.

Im Betrieb des Hörinstruments 2 wird mittels der Eingangswandler 6 ein Schallsignal aus der Umgebung des Hörinstruments 2 aufgenommen und über Signalleitungen 20 als Audiosignal (d.h. als ein die Schallinformation tragendes elektrisches Signal) an die Signalverarbeitungseinheit 8 ausgegeben. Durch die Signalverarbeitungseinheit 8 wird das aufgenommene Audiosignal verarbeitet. Die Signalverarbeitungseinheit 8 umfasst hierzu insbesondere einen Verstärker, durch den das aufgenommene Audiosignal frequenzabhängig verstärkt wird, um die Hörschädigung des Trägers zu kompensieren. Die Signalverarbeitungseinheit 8 gibt über eine Signalleitung 22 ein aus dieser Verarbeitung resultierendes modifiziertes Audiosignal an den Ausgangswandler 10 aus. Dieser wandelt das modifizierte Audiosignal wiederum in ein Schallsignal um. Dieses (gegenüber dem aus der Umgebung aufgenommenen Schall modifizierte) Schallsignal wird von dem Ausgangswandler 10 zunächst durch einen Schallkanal 24 an eine Spitze 26 des Gehäuses 4, und von dort durch einen (nicht explizit dargestellten) Schallschlauch zu einem in das Ohr des Trägers einsetzbaren oder eingesetzten Ohrstück geleitet.

Die Signalverarbeitungseinheit 8 wird über eine Stromleitung 28 aus der Batterie 12 mit elektrischer Energie versorgt.

Die Ladespule 16 dient zum Wiederaufladen der Batterie 12 mit elektrischer Energie und kann zu diesem Zweck induktiv mit einem (in Fig. 2 schematisch angedeuteten) Ladegerät 30 gekoppelt werden. Die Ladespule 16 ist hierzu ausgelegt, von dem Ladegerät 30 ein magnetisches Wechselfeld M1 zu empfangen. Ein durch dieses Wechselfeld M1 in der Ladespule 16 induzierter Ladestrom wird über eine Anschlussleitung 32 (Fig. 1) der Ladeelektronik 17 zugeführt, die das Aufladen der Batterie 12 regelt.

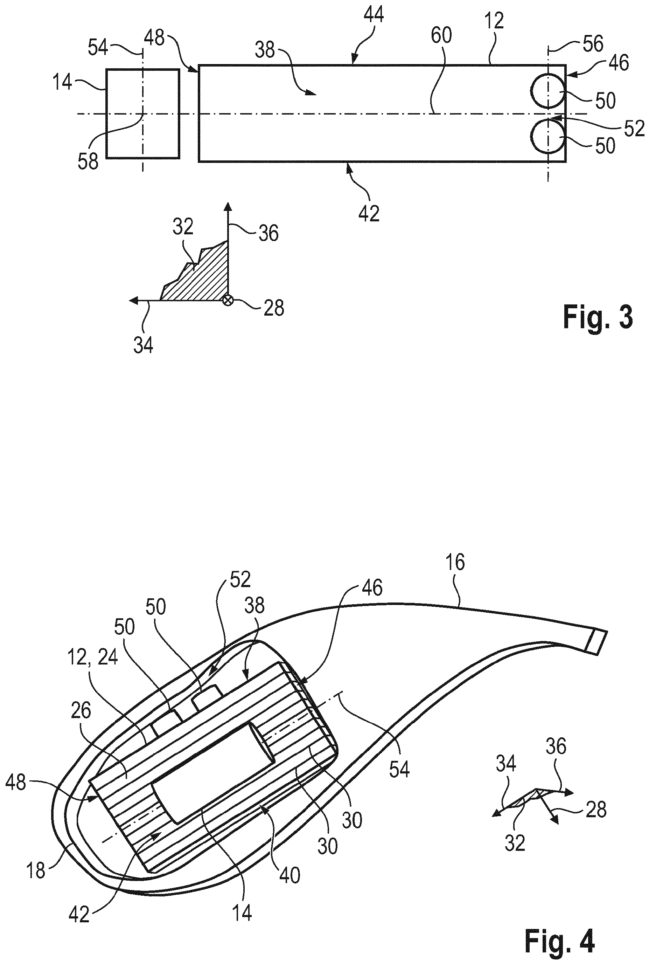

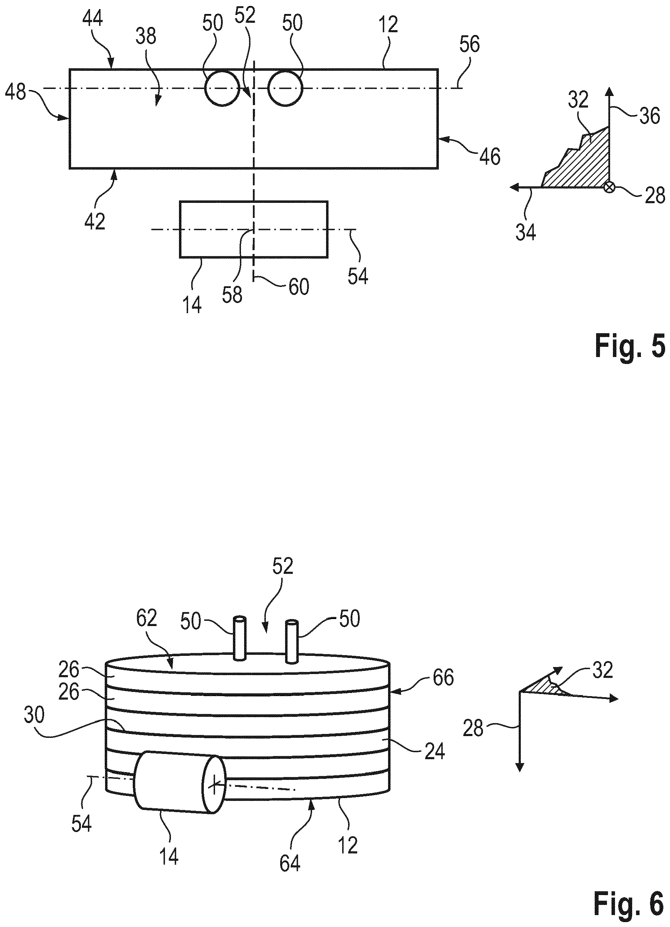

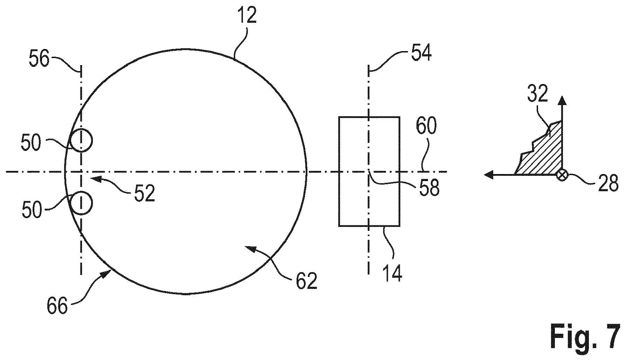

Die MI-Antenne 14 ist beispielsweise - wie in Fig. 3 angedeutet - als induktiver Transceiver zum Datenaustausch mit einem zweiten Hörinstrument 34 ausgebildet, wobei dieses zweite Hörinstrument 34 an dem anderen Ohr des Trägers getragen wird (das zweite Hörinstrument 34 ist vorzugsweise baugleich zu dem Hörinstrument 2 ausgebildet und in Fig. 3 lediglich aus Gründen der Übersichtlichkeit kleiner als letzteres dargestellt). Die MI-Antenne 14 ist dabei zum Senden und Empfangen von magnetischen Wechselsignalen M2 im Mega-Hertz-Bereich (z.B. mit einer Frequenz von 3,3 MHz) ausgebildet. Innerhalb des Gehäuses 4 ist die MI-Antenne 14 über eine Signalleitung 36 mit einer (nicht explizit dargestellten) Sende- und Empfangseinheit der Signalverarbeitungseinheit 8 verbunden.

Wie aus den Fig. 1 und 4 erkennbar ist, ist der Magnetkern 18 als zylinderförmiger Hohlkörper aus weichmagnetischem Ferrit gebildet. Er umfasst demnach zwei parallele Stirnflächen 38, die einander entlang einer Achse 40 gegenüberliegen, sowie eine Umfangswand 42, die die Stirnflächen 38 verbindet. In dem gezeigten Ausführungsbeispiel haben die Stirnseiten 38 aus Bauraumgründen eine unregelmäßige Form eines an einer Seite abgeplatteten Ovals.

Der Magnetkern 18 ist insbesondere aus zwei Teilen, nämlich aus einem (durch eine der Stirnflächen 38 und die Umfangswand 42 gebildeten) Topf 44 und einem (durch die zweite Stirnfläche 38 gebildeten) Deckel 46 zusammengesetzt. Alternativ ist der Magnetkern 18, wie in EP 2 899 830 B1 beschrieben, durch einen Ferritring gebildet, der an beiden Seiten durch aufgesetzte Deckel verschlossen ist. In beiden Fällen ist der Magnetkern 18 allseitig geschlossen. Zumindest Teile der Stromleitung 28 und der Anschlussleitung 32 werden in diesem Fall mit der Batterie 12 bzw. der Ladeelektronik 17 verbunden, bevor der Deckel 46 auf den Topf 44 aufgesetzt wird. Die Stromleitung 28 und die Anschlussleitung 32 werden dabei insbesondere zwischen dem Topf 44 und dem Deckel 46 aus dem Magnetkern 18 herausgeführt.

Die MI-Antenne 14 und die Ladespule 16 sind derart auf den Magnetkern 18 aufgewickelt, dass ihre jeweiligen Spulenachsen 48 und 50 orthogonal (d.h. unter Ausbildung eines Winkels von 90°) aufeinander stehen. Die MI-Antenne 14 ist dabei um die Umfangswand 42 des Magnetkerns 18 herumgewickelt, wodurch ihre Spulenachse 48 parallel zu der Achse 40 des Magnetkerns 18 ausgerichtet ist und mit letzterer insbesondere zusammenfällt. Bevorzugt ist die MI-Antenne 14 dabei mittig auf die Umfangswand 42 aufgewickelt. Sie kann aber auch - wie exemplarisch in Fig. 4 gezeigt ist - versetzt zu der Mitte der Umfangswand 42 angeordnet sein. Die Ladespule 16 ist dagegen über die Umfangswand 42 und die Stirnseiten 38 auf den Magnetkern 18 aufgewickelt, so dass ihre Spulenachse 50 orthogonal zu der Achse 40 des Magnetkerns 18 ausgerichtet ist.

In beispielhafter Dimensionierung hat der Magnetkern 18 eine (in Richtung seiner Achse 40 gemessene) Höhe von 4 Millimetern, und eine (in Richtung der Spulenachse 50 und somit quer zu der Achse 40 gemessene) Breite von 10 Millimetern. Das Verhältnis der Höhe zu der Breite beträgt somit in diesem Beispiel 1:2,5.

Die Erfindung wird an dem vorstehend beschriebenen Ausführungsbeispiel besonders deutlich, ist gleichwohl hierauf aber nicht beschränkt. Vielmehr können weitere Ausführungsformen der Erfindung aus den Ansprüchen und der vorstehenden Beschreibung abgeleitet werden.

### Bezugszeichenliste

- 2: Hörinstrument
- 4: Gehäuse
- 6: Eingangswandler
- 8: Signalverarbeitungseinheit
- 10: Ausgangswandler
- 12: Batterie
- 14: MI-Antenne
- 16: Ladespule
- 17: Ladeelektronik
- 18: Magnetkern
- 20: Signalleitung
- 22: Signalleitung
- 24: Schallkanal
- 26: Spitze
- 28: Stromleitung
- 30: Ladegerät
- 32: Anschlussleitung
- 34: Hörinstrument
- 36: Signalleitung
- 38: Stirnfläche
- 40: Achse
- 42: Umfangswand
- 44: Topf
- 46: Deckel
- 48: Spulenachse
- 50: Spulenachse

- M1: (magnetisches) Wechselfeld
- M2: (magnetisches) Wechselsignal

## Patentansprüche

1. Hörinstrument (2)
- mit einer wiederaufladbaren Batterie (12),
- mit einer Ladespule (16) zum induktiven Empfangen von Energie zum Aufladen der Batterie (12),
- mit einer von der Ladespule (16) elektrisch getrennten Sende- und/oder Empfangsspule (14) zum induktiven Senden und/oder Empfangen von Daten, und
- mit einem Magnetkern (18), auf den sowohl die Ladespule (16) als auch die Sende- und/oder Empfangsspule (14) aufgewickelt sind.

2. Hörinstrument (2) nach Anspruch 1,
wobei die Ladespule (16) und die Sende- und/oder Empfangsspule (14) derart auf dem Magnetkern (18) aufgewickelt sind, dass ihre Spulenachsen (48,50) exakt oder näherungsweise orthogonal zueinander ausgerichtet sind.

3. Hörinstrument (2) nach Anspruch 1 oder 2,
wobei der Magnetkern (18) als Hohlkörper ausgebildet ist, und wobei die Batterie (12) und/oder eine Elektronikkomponente des Hörinstruments (2), insbesondere eine Ladeelektronik (17), in dem Magnetkern (18) angeordnet sind.

4. Hörinstrument (2) nach einem der Ansprüche 1 bis 3,
wobei der Magnetkern (18) eine zylindrische Form mit zwei einander entlang einer Achse (40) gegenüberliegenden, parallelen Stirnflächen (38) und einer die Stirnflächen (38) verbindenden Umfangswand (42) aufweist.

5. Hörinstrument (2) nach Anspruch 4,
wobei der Magnetkern (18) eine entlang seiner Achse (40) gemessene Höhe und eine senkrecht zu seiner Achse gemessene Breite aufweist, und wobei das Verhältnis der Höhe zu der Breite zwischen 1:1 und 1:4, insbesondere etwa 1:2,5 beträgt.

6. Hörinstrument (2) nach Anspruch 4 oder 5,
wobei eine der beiden Spulen (14) um die Umfangswand (42) gewickelt ist, so dass ihre Spulenachse (48) parallel zu der Achse (40) des Magnetkerns (18) ausgerichtet ist, und wobei die andere Spule (16) über die Stirnflächen (38) und Umfangswand 42) gewickelt ist, so dass ihre Spulenachse (50) orthogonal zu der Achse (40) des Magnetkerns (18) ausgerichtet ist.

7. Hörinstrument (2) nach einem der Ansprüche 1 bis 6,
wobei der Magnetkern (18) aus einem weichmagnetischen Ferritmaterial besteht.
